# EUROPÄISCHE PATENTSCHRIFT

(11) **EP 3 631 228 B1**
(45) Veröffentlichungstag und Bekanntmachung des Hinweises auf die Patenterteilung: **14.07.2021**
(21) Anmeldenummer: 18730657.6
(22) Anmeldetag: 24.05.2018
(51) Int. Cl.: F16D 55/227, F16D 65/18, F16D 65/56, F16D 55/2255

(54) **SCHEIBENBREMSE UND BREMSBETÄTIGUNGSMECHANISMUS**
DISK BRAKE AND BRAKE ACTUATION MECHANISM
FREIN À DISQUE ET MÉCANISME D'ACTIONNEMENT DE FREIN

(30) Priorität: 26.05.2017 DE 102017005027
(43) Veröffentlichungstag der Anmeldung: 08.04.2020
(73) Patentinhaber: Haldex Brake Products AB, 261 24 Landskrona (SE)
(72) Erfinder: KJELL, Önnestam, 246 36 Löddeköpinge (SE)
(74) Vertreter: Habermann, Hruschka & Schnabel
(86) Internationale Anmeldenummer: PCT/EP2018/063740
(87) Internationale Veröffentlichungsnummer: WO 2018/215633

(56) Entgegenhaltungen:
- WO-A1-2014/106672
- WO-A2-2011/113554
- WO-A2-2013/083857
- WO-A2-2015/140225

## Beschreibung

Die vorliegende Erfindung betrifft einen Bremsbetätigungsmechanismus für eine Scheibenbremse sowie eine Scheibenbremse, insbesondere für Nutzfahrzeuge, die einen solchen Bremsbetätigungsmechanismus aufweist.

Hierbei sind von der Erfindung Scheibenbremsen umfasst, die entweder einen Gleitsattel oder einen Festsattel aufweisen, und die eine oder mehrere Bremsscheiben übergreifen. Die Erfindung bezieht sich hauptsächlich, aber nicht ausschließlich, auf Teilbelag-Scheibenbremsen.

Scheibenbremsen, insbesondere für Schwerlastkraftwagen, sind in den unterschiedlichsten Ausführungsformen bekannt, sowohl was die Art des Bremsbetätigungsmechanismus, die Art und Weise der Übertragung der Bremskraft auf eine oder mehrere Bremsscheiben als auch die Art der Nachstellung zum Ausgleich eines Verschleißes der Bremsbeläge angeht.

Eine spezielle Ausführungsform einer Bremsbetätigungsvorrichtung, die in Scheibenbremsen zum Einsatz kommt, ist beispielsweise aus der Internationalen Anmeldung WO 2011/113554 A2 der Anmelderin bekannt. Der aus dieser Anmeldung bekannte Bremsbetätigungsmechanismus zeichnet sich durch einen äußerst kompakten Aufbau aus, der mit einem geringeren Raumbedarf in dem Gehäuse des Bremssattels und mit einem geringeren Gewicht einhergeht. Sämtliche Komponenten dieses Bremsbetätigungsmechanismus sind mittels eines in dem Gehäuse des Bremssattels in Axialrichtung gelagerten Stabs funktional zusammenwirkend in dem Bremssattel so montiert, dass diese parallel zu der Rotationsachse der Bremsscheibe wirken. Infolge einer Verlagerungsbewegung des Verstärkungsmechanismus führt ein Druckelement zusammen mit einer Nachstelleinrichtung eine Translationsbewegung in Richtung auf die Bremsscheibe aus, um die Zuspannkraft zu übertragen.

Die Nachstelleinrichtung für den Ausgleich des Verschleißes weist eine Momentenkupplung auf, die drehmomentgesteuert ist und der selektiven Übertragung einer drehrichtungsabhängigen Rotation zwischen Bauteilen der Momentenkupplung dient. Darüber hinaus weist die Nachstelleinrichtung noch eine Einwegkupplung auf, bei der zwei auf dem Stab drehbar gelagerte Elemente, eine innere Aufnahmehülse und eine Hohlwelle mittels einer Freilauffeder miteinander verbunden sind, wobei die Einwegkupplung dabei so konzipiert ist, dass diese während einer Bremsbetätigung eine Drehbewegung zwischen den beiden Elementen überträgt, während diese bei Bremsfreigabe durchrutscht.

Zur genauen Funktionsweise hinsichtlich Zustellung und Übertragung der Bremskraft sowie der Nachstellbewegung bei dem aus dem Stand der Technik bekannten Bremsbetätigungsmechanismus wird hiermit ausdrücklich auf den Offenbarungsgehalt der WO 2011/113554 A2 verwiesen. Weitere, ähnlich konzipierte Bremsbetätigungsmechanismen sind beispielsweise aus der WO 2013/083857 A2, der WO 2014/106672 A2 oder der WO 2015/140225 A2 der Anmelderin bekannt, auf die hiermit ebenfalls ausdrücklich Bezug genommen wird.

Den oben genannten Bremsbetätigungsmechanismen aus dem Stand der Technik ist gemeinsam, dass eine Hohlwelle, die auf dem Stab drehbar gelagert ist, als Eingangselement für die Nachstelleinrichtung dient und durch den Hebel des Verstärkungsmechanismus unmittelbar in Drehung versetzt wird. Hierzu ist an der Hohlwelle an einer geeigneten Stelle ein Zapfen oder ähnliches Element vorgesehen, wobei der Zapfen radial von der Hohlwelle absteht und von einer Ausnehmung in dem Hebel, im Bereich seiner Schwenklagerfläche, mit einem definierten Spiel aufgenommen ist. Hierdurch kann die Hohlwelle durch eine Schwenkbewegung des Hebels in Drehung versetzt werden, die dann in die Nachstelleinrichtung eingeleitet wird. Mit fortschreitender Schwenkbewegung des Hebels nimmt der Druck auf den Zapfen der Hohlwelle, die ausschließlich drehbar gelagert ist, zu, wobei einerseits der Druck von dem Hebel hauptsächlich in Axialrichtung auf die Bremsscheibe wirkt, wodurch sich die Hebelwirkung auf den Zapfen erhöht, und wobei andererseits durch die Relativbewegung zwischen der Ausnehmung des Bremshebels und dem Zapfen beim Schwenken ein erhöhter Flächendruck wirkt, der zu erhöhten Reibungskräften zwischen der Oberfläche des Zapfens und der Oberfläche der Ausnehmung im gemeinsamen Kontaktpunkt führt.

Bei häufigen Bremsbetätigungen, wie sie beispielsweise bei Bussen im öffentlichen Nahverkehr auftreten können, ist die Verbindung aus Zapfen und Ausnehmung daher unter Umständen einem erhöhten Verschleiß ausgesetzt, was aus Gründen der Funktionssicherheit und der Lebensdauer selbstverständlich unerwünscht ist.

Ausgehend davon stellt sich die Erfindung die Aufgabe, einen Bremsbetätigungsmechanismus bereitzustellen, der in dieser Hinsicht eine größere Funktionssicherheit bei einem gleichzeitig kompakten bzw. kompakteren Aufbau bietet. Eine weitere Aufgabe besteht darin, einen Bremsbetätigungsmechanismus für eine Scheibenbremse, insbesondere für Nutzfahrzeuge, bereitzustellen, bei der die Nachstelleinrichtung, was deren Betätigung betrifft, einem geringeren Verschleiß ausgesetzt ist. Darüber hinaus besteht eine Aufgabe darin, eine Scheibenbremse zur Verfügung zu stellen, bei der derartige Bremsbetätigungsmechanismen zur Anwendung kommen.

Gelöst werden diese Aufgaben mit einem Bremsbetätigungsmechanismus nach Anspruch 1 und mit einer einen solchen Bremsbetätigungsmechanismus aufweisenden Scheibenbremse nach Anspruch 12.

Allgemein, im Prinzip unabhängig von der konkreten Ausgestaltung des Bremsbetätigungsmechanismus und der darin implementierten Nachstelleinrichtung sowie der im Zusammenhang mit dieser Nachstelleinrichtung zum Einsatz kommenden Momentkupplung, liegt der Kern der vorliegenden Erfindung darin, einen Bremsbetätigungsmechanismus für eine Scheibenbremse bereitzustellen, der aufweist:
- einen Verstärkungsmechanismus zur Einleitung einer Zuspannkraft für den Bremsvorgang,
- ein Druckelement zur Übertragung der Zuspannkraft auf eine Bremsscheibe,
wobei der Verstärkungsmechanismus und das Druckelement so zusammenwirken, dass das Druckelement durch eine Verlagerungsbewegung des Verstärkungsmechanismus eine Bewegung in Richtung auf die Bremsscheibe ausführt,
- und eine Nachstelleinrichtung zum Ausgleich eines Belagverschleißes, die mit dem Druckelement zusammenwirkt,
wobei der Verstärkungsmechanismus, das Druckelement und die Nachstelleinrichtung mittels eines in einem Gehäuse eines Bremssattels der Scheibenbremse in Axialrichtung unbeweglich und nicht drehbar gelagerten Stabs funktional zusammenwirkend in dem Bremssattel montierbar sind,
wobei ein Eingangselement der Nachstelleinrichtung als eine Hohlwelle ausgebildet ist, die auf dem Stab drehbar gelagert und durch eine Verlagerungsbewegung des Verstärkungsmechanismus in Drehung versetzbar ist, und wobei die Hohlwelle auf dem Stab axial verschieblich bewegbar gelagert ist.

Auf Grund der Tatsache, dass sich zumindest das Eingangselement auf dem Stab, zusätzlich zu der durch die Verlagerungsbewegung des Verstärkungsmechanismus induzierten Drehbewegung, in der Regel durch eine Schwenkbewegung eines Hebels des Verstärkungsmechanismus, auch axial verschieblich bewegen kann, und zwar in Axialrichtung des Stabes in Richtung auf die Bremsscheibe zu und von dieser weg, wird beim Einleiten der Zuspannkraft der Flächendruck und die Reibungskraft an der Verbindungsstelle zwischen dem Verstärkungsmechanismus und dem als Hohlwelle ausgestalteten Eingangselement für die Nachstelleinrichtung reduziert, in der Regel also zwischen einem radialen Zapfen der Hohlwelle und der Ausnehmung im Hebel, da der Umfang der zwischen diesen Elementen ablaufenden Relativbewegung insgesamt verringert ist.

Während beim geschilderten Stand der Technik der Zapfen ausschließlich eine Rotationsbewegung um die Achse des Stabes vollführt, wenn die Ausnehmung im Hebel eine nach vorne, d.h. zur Bremsscheibe hin gerichtete und mit der Schwenkbewegung des Hebels korrespondierende Dreh- bzw. Kreisbewegung vollführt, wird von dem Eingangselement und dem in der Regel daran integral angeordneten Zapfen eine kombinierte Dreh- und axiale Verschiebebewegung ausgeführt. Mit anderen Worten, der Zapfen wandert gemeinsam mit der Ausnehmung in Axialrichtung, während sich der Zapfen relativ in der Ausnehmung bewegen kann. Der Zapfen bewegt sich folglich auf einer Spirale bzw. vollführt eine Schraubenteilbewegung.

In diesem Zusammenhang kann die Ausnehmung im Vergleich zum Stand der Technik auch eine andere Innenkontur aufweisen, die auf die Außenkontur des Zapfens unter Berücksichtigung der zwischen beiden Elementen stattfindenden Relativbewegung abgestimmt ist, um die Reibungskräfte so gering wie möglich zu halten.

In einer Ausführungsform steht das Eingangselement unter einer definierten Vorspannung, so dass die Verlagerungsbewegung des Hebels gegen diese Vorspannung wirkt.

Hierzu kann ein Federelement, bspw. eine entsprechend dimensionierte und den Stab koaxial umgebende Schraubenfeder, vorgesehen sein, das zwischen einem Widerlager und dem Eingangselement bzw. der gesamtem Nachstelleinrichtung mittelbar oder unmittelbar wirkt.

In einer bevorzugten Ausführungsform ist das Federelement in einem Lagerkörper eingefasst, bspw. einer Lagerhülse aufgenommen, die zu dem Widerlager einen definierten Abstand einhält. Durch diesen Abstand in Axialrichtung wird in konstruktiver Hinsicht der Verschiebeweg auf dem Stab festgelegt, den das Eingangselement und in der Regel damit die gesamte Nachstelleinrichtung maximal zurücklegen können. Die Lagerhülse stützt sich kraftübertragend mittelbar oder unmittelbar an dem Eingangselement ab.

Dieser maximale Weg entspricht damit auch dem maximalen Weg, den der Kontaktpunkt zwischen dem Zapfen und der Ausnehmung auf einer spiralähnlichen Bahn durchlaufen kann.

Das Widerlager ist vorzugsweise an dem bremsscheibenzugewandten Ende des Stabs angeordnet, und zwar an einer Stelle, die nach einer erfolgten Montage des Bremsbetätigungsmechanismus den Wert der Vorspannung des Federelements in Abstimmung mit den axialen Längen der weiteren Bauteile des Verstärkungsmechanismus, der Nachstelleinrichtung, der Rückstelleinrichtung und des Druckelements festlegt. Mit anderen Worten, die Abmessungen bzw. axialen Baulängen der einzelnen Komponenten sowie des Stabs sind so ausgewählt und aufeinander abgestimmt, dass einerseits das Federelement die gewünschte Vorspannung zur Verfügung stellt und andererseits darüber hinaus auch die Rückstelleinrichtung die gewünschte Rückstellkraft aufbringen kann.

In einer weiteren Ausführungsform des Bremsbetätigungsmechanismus gemäß der Erfindung ist das Widerlager, an dem sich das Federelement für die Vorspannung bremsscheibenzugewandt abstützt, auf dem Stab drehbar gelagert.

Das Widerlager kann dabei mit weiteren Elementen kraft- und/oder drehmomentübertragend zusammenwirken, wie beispielsweise einer Widerlagerschale, an der sich eine Feder der Rückstelleinrichtung abstützt. Die Widerlagerschale wiederum steht mit einem Element der Nachstelleinrichtung, wie einer Hohlspindel, in einer drehmomentübertragenden, jedoch eine axiale Verschiebebewegung zulassenden Verbindung.

Die Widerlagerschale und damit das Widerlager für das Federelement werden auf dem Stab mittels eines Befestigungsmittels in einer definierten Axialposition gehalten.

Gemäß der Erfindung ist es dabei vorgesehen, dass die zwischen dem Stab und dem Befestigungselement wirkenden Reibungskräfte über deren Dimensionierung und die Oberflächengestaltung der Kontaktflächen ein definiertes Moment erzeugen, das in die Nachstelleinrichtung eingeleitet wird und das dabei so gewählt ist, dass der Verschleiß zwischen beweglichen Teilen der Nachstelleinrichtung reduziert werden kann.

Das als Hülse bzw. Hohlwelle ausgebildete Eingangselement ist mit einer Radiallagernabe über eine erste Freilauffeder unter Ausbildung einer ersten Momentenkupplung gekoppelt. Die als Abtriebselement wirkende Radiallagernabe schließt sich axial an das als Antriebselement wirkende Eingangselement an, wobei beide Komponenten die erste Freilauffeder radial innenseitig einschließen und die erste Freilauffeder zu dem Stab einen radialen Abstand einhält.

Die Radiallagernabe steht über ein Radialkugellager mit einer in Bezug auf die Bremsscheibe gesehen vorderen Momentenhülse bzw. einem vorderen Kupplungsring in einer drehfesten, aber axial verschiebbaren Verbindung. Der vordere Kupplungsring ist über einen Rollen-Rampen-Mechanismus mit einer hinteren Momentenhülse bzw. mit einem hinteren Kupplungsring unter Ausbildung einer zweiten Momentenkupplung gekoppelt.

Der hintere Kupplungsring wiederum steht mit einer diesen radial umgebenden Nachstellspindel der Nachstelleinrichtung in einer drehfesten Verbindung, die mit einem drehfest, jedoch verschieblich in dem Gehäuse des Bremssattels gelagerten hülsen- bzw. topfartigen Druckstück des Druckelements in einem Gewindeeingriff steht. Die Nachstellspindel ist als eine Hohlspindel ausgebildet, die die gesamte Nachstelleinrichtung einfasst.

Der hintere Kupplungsring ist an dem Lagersitzkörper eines Hebels über ein vorzugsweise friktionsarmes Lagerelement drehbar gelagert. Da darüber hinaus die Nachstellspindel an ihrem stirnseitigen, bremsscheibenabgewandten Ende mit dem Lagersitzkörper unmittelbar in Kontakt steht, läuft bei Bremsbestätigung der Hauptkraftfluss der von dem Hebel eingeleiteten Zuspannkraft von dem Lagersitzkörper des Hebels unmittelbar über die Nachstellspindel und über den Gewindeeingriff in das Druckstück und damit über einen mit diesem in Verbindung stehenden Bremsbelag auf die Bremsscheibe. Die Nachstelleinrichtung ist dadurch im Wesentlichen von der Zuspannkraft entkoppelt.

An dem vorderen Kupplungsring greift eine Rückstellfeder der Rückstelleinrichtung an, wobei zwischen der Rückstellfeder und dem vorderen Kupplungsring ein Haltering vorgesehen ist und der vordere Kupplungsring über ein weiteres friktionsarmes Lagerelement an dem Haltering drehbar gelagert ist. An der dem Haltering gegenüberliegenden Seite stützt sich die Rückstellfeder an der auf dem Stab drehbar gelagerten Widerlagerschale ab, wobei sich die Rückstellfeder zwischen der Widerlagerschale und dem Haltering über einen definierten axialen Abstand erstreckt. Die Widerlagerschale ist durch das Widerlager für das Federelement für die Vorspannung und das Befestigungselement, das auf dem bremsscheibenseitigen Ende des Stabes befestigbar ist, axial positioniert und durch die Federkraft der Rückstellfeder dort gehalten, wobei die Widerlagerschale die Nachstellspindel bremsscheibenseitig nach vorne abschließt und damit die im Inneren der Nachstellspindel vollständig aufgenommene Nachstelleinrichtung sowie die durch die Rückstellfeder gebildete Rückstelleinrichtung schützend abdichtet.

Die axialen Abmessungen des Verstärkungsmechanismus, der Nachstelleinrichtung, des Druckelements und der Rückstelleinrichtung im Verhältnis zu deren Anordnung auf dem Stab und im Verhältnis zu der durch diesen definierten Einbaulage im Bremssattel können dabei so konzipiert sein, dass die Rückstellfeder auf die zweite Momentenkupplung eine definierte Federkraft unter Bereitstellung einer definierten Drehmomentbegrenzung ausüben, wobei dies gemäß der Erfindung insgesamt wiederum unter Berücksichtigung der zu erzielenden Vorspannung erfolgt.

Die Erfindung betrifft darüber hinaus auch eine Scheibenbremse, die einen Bremsbetätigungsmechanismus nach zumindest einem der oben geschilderten Ausgestaltungen aufweist. Insbesondere betrifft die Erfindung eine Scheibenbremse, bei der ein Bremsbetätigungsmechanismus nach zumindest einem der oben geschilderten Ausgestaltungen durch einen Stab in einem Gehäuse eines Bremssattels der Scheibenbremse zumindest modulweise oder insgesamt als eine selbsttragende Einheit montierbar ist.

Weitere Vorteile und Merkmale der Erfindung ergeben sich aus der nachfolgenden Beschreibung der anhand der Zeichnungen dargestellten Ausführungsbeispiele. Es zeigen
- Fig. 1: einen seitlichen Längsschnitt in Axialrichtung eines Bremsbetätigungsmechanismus gemäß der Erfindung;
- Fig. 2a: eine Explosionsdarstellung eines Teils des Bremsbetätigungsmechanismus;
- Fig. 2b: eine Explosionsdarstellung eines weiteren Teils des Bremsbetätigungsmechanismus;
- Fig. 3: eine perspektivische Ansicht eines zusammengebauten Bremsbetätigungsmechanismus von vorne;
- Fig. 4a: einen Querschnitt entlang M - M aus Fig. 1;
- Fig. 4b: einen Querschnitt entlang L - L aus Fig. 1;
- Fig. 4c: einen Querschnitt entlang S - S aus Fig. 1;
- Fig. 5: einen Längsschnitt in Axialrichtung von oben des Bremsbetätigungsmechanismus gemäß der Erfindung;

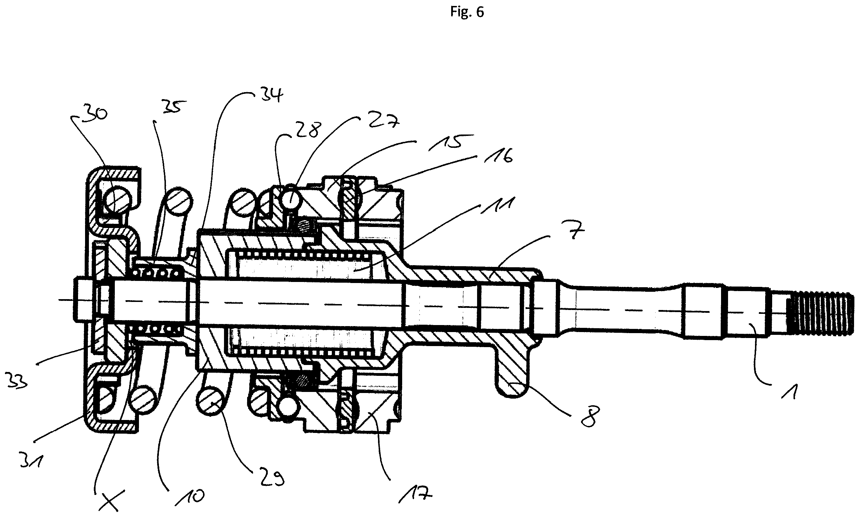

- Fig. 6: einen Längsschnitt in Axialrichtung durch eine auf einem Stab montierte Nachstelleinrichtung und Rückstelleinrichtung gemäß der Erfindung; und
- Fig. 7: schematisch eine perspektivische Ansicht eines Bremsbelaghalters, der mit dem Druckelement zusammenwirkt.

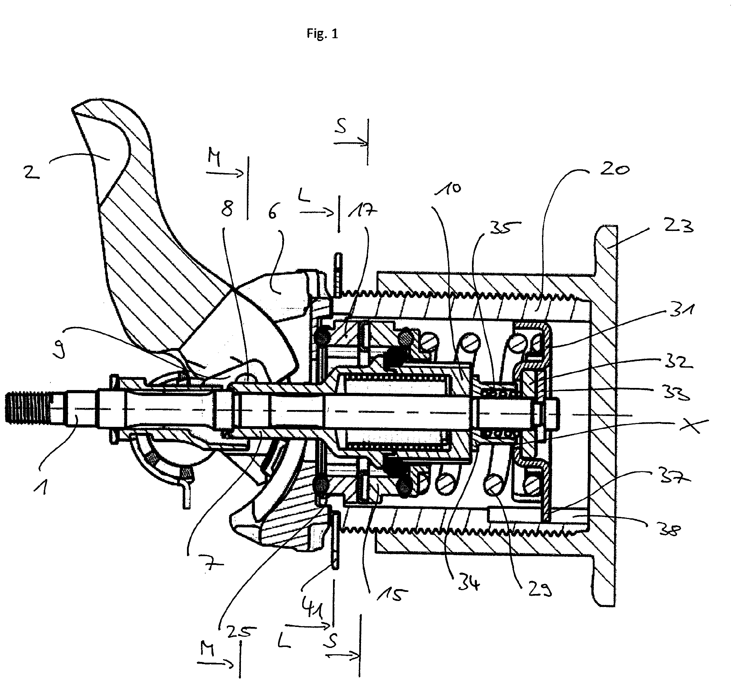

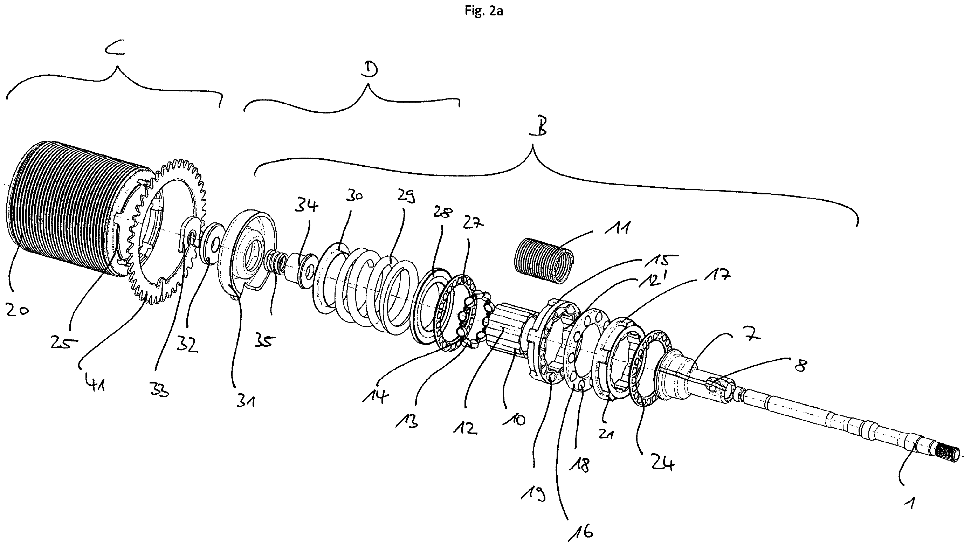

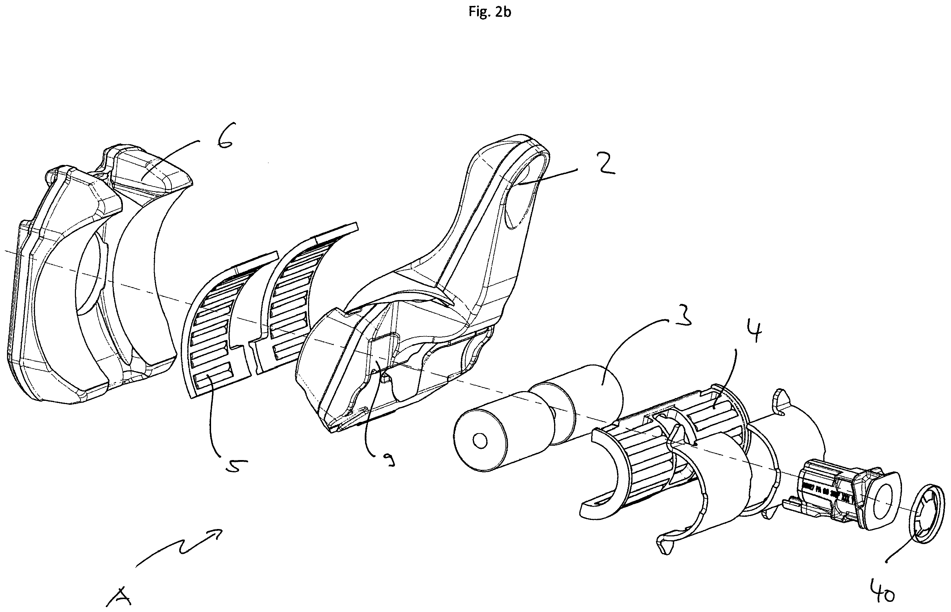

Die Figuren 1 bis 3 zeigen allgemein alle Komponenten eines Bremsbetätigungsmechanismus gemäß der Erfindung. Zur genauen Einbaulage eines solchen Bremsbetätigungsmechanismus gemäß der Erfindung in einem Gehäuse eines Bremssattels soll beispielhaft auf die WO 2011/113554 A2 der Anmelderin verwiesen werden, auf deren Offenbarungsgehalt hiermit ausdrücklich Bezug genommen wird.

Der Bremsbetätigungsmechanismus gemäß der Erfindung besteht im Wesentlichen aus vier Modulen, die funktional zusammenwirken, nämlich aus einem Verstärkungsmechanismus A, einer Nachstelleinrichtung B, einem Druckelement C und einer Rückstelleinrichtung D, wobei der Bremsbetätigungsmechanismus als eine selbsttragende Einheit mittels eines zentral angeordneten Stabs 1 auf diesem selbst und dadurch in einem Gehäuse des Bremssattels montierbar ist.

Der Verstärkungsmechanismus A dient dazu, eine Betätigungskraft von einem (hier nicht dargestellten) hydraulischen, pneumatischen oder elektro-mechanischen Aktuator als Zuspannkraft in den Bremsbetätigungsmechanismus einzuleiten und gemäß eines durch seine Konstruktion bedingten Übersetzungsverhältnisses zu verstärken. Ein Hebel 2 ist in einem rückseitigen Gehäuseabschnitt eines (hier ebenfalls nicht dargestellten) Bremssattels schwenkbar gelagert, indem dieser gegenüber einer Walze 3 drehbar angeordnet ist, wobei die Walze 3 im Verhältnis zu der Drehachse des Hebels 2 exzentrisch positioniert ist. Zwischen der Walze 3 und der entsprechenden Fläche des Hebels 2 sind Nadellager bzw. Nadellagerkäfige 4 vorgesehen.

An der der Walze 3 gegenüberliegenden Seite ist der Hebel 2 über entsprechende Nadellager bzw. Nadellagerkäfige 5 in entsprechenden Lagerflächen eines vorzugsweise einstückigen Lagersitzkörpers 6 schwenkbar gelagert.

Der Verstärkungsmechanismus A ist so konzipiert, dass durch eine Drehung um die Walze 3 der Hebel 2 dieser gegenüber eine exzentrische Verlagerungsbewegung vollführt, die zu einer entsprechenden Verstärkung der am Hebel 2 angreifenden Betätigungskraft führt, die dann als Zuspannkraft über eine auf eine (hier nicht dargestellte) Bremsscheibe gerichtete Bewegung des Lagersitzkörpers 6, der hierfür in dem Gehäuse des Bremssattels mittelbar oder unmittelbar linear geführt sein kann, auf die Nachstelleinrichtung B und das Druckelement C übertragen wird.

Die Nachstelleinrichtung B folgt in Axialrichtung in Bezug auf die Bremsscheibe gesehen unmittelbar im Anschluss an den Lagersitzkörper 6 für den Hebel 2.

Die Nachstelleinrichtung B weist mehrere, funktional zusammenwirkende Elemente auf.

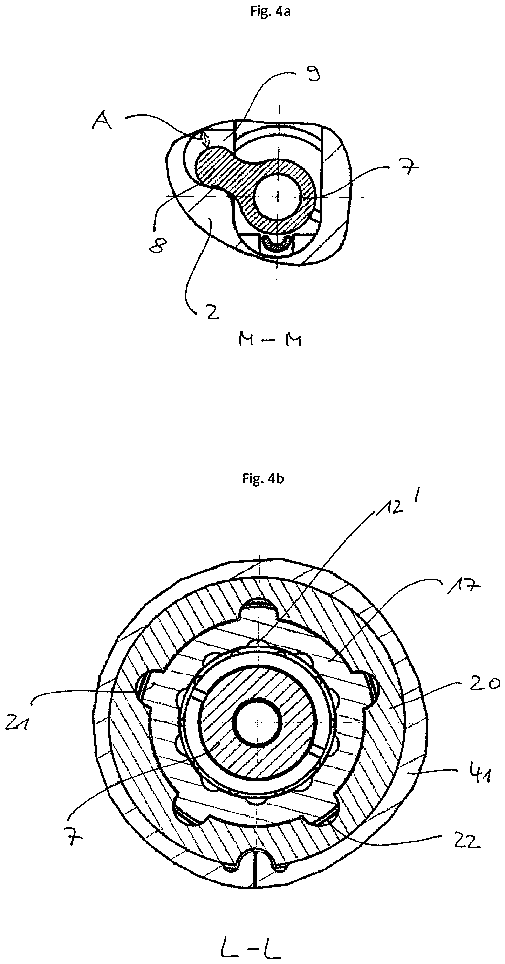

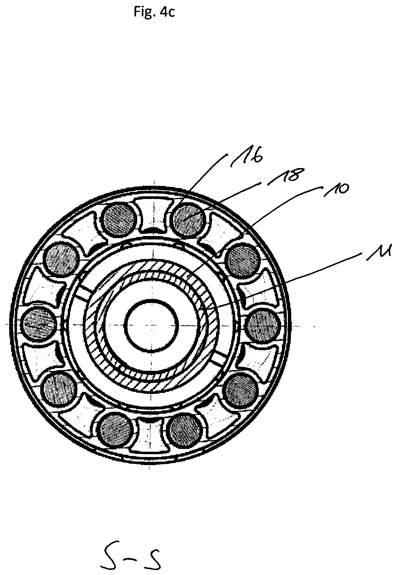

Ein als eine Hohlwelle ausgestaltetes Eingangselement 7 für die Nachstelleinrichtung B ist auf dem Stab 1 drehbar gelagert. Die Hohlwelle 7 weist einen einstückigen Zapfen 8 auf, der in einer Ausnehmung 9 in dem Hebel 2 aufgenommen ist, wie exemplarisch die Fig. 4a zeigt. Eine Schwenkbewegung des Hebels 2 versetzt das Eingangselement 7 über die Verbindung aus Zapfen 8 und Ausnehmung 9 in Rotation, wie nachfolgend noch detaillierter in Zusammenhang mit der Fig. 4a erläutert werden soll.

Das Eingangselement 7 ist mit einem Ausgangselement 10 über eine Freilauffeder 11 verbunden, die so eine erste Momentenkupplung ausbilden. Das Ausgangselement 10 ist ebenfalls auf dem Stab 1 drehbar gelagert und als eine Radiallagernabe ausgebildet, die axiale Längsrillen 12 aufweist, in der Kugelkörper 13 eines Kugelkäfigs 14 verschieblich geführt sind.

Auf diese Art und Weise ist es möglich, dass das Ausgangselement 10, das über die Freilauffeder 11 von dem Eingangselement 7 rotatorisch angetrieben wird, eine Drehbewegung auf einen ersten, vorderen Kupplungsring 15 einer zweiten Momentenkupplung übertragen kann, und dennoch relativ zu diesem Kupplungsring 15 axial verschieblich angeordnet ist, wobei der Kupplungsring 15 innenseitig ebenfalls Längsrillen 12' zur Aufnahme und Führung der Kugelkörper 13 aufweist.

Die zweite Momentenkupplung ist ausgebildet, indem der vordere Kupplungsring 15 über einen Kugellagerring 16 mit einem zweiten, hinteren Kupplungsring 17 zusammenwirkt. Hierbei sind die Kugeln 18 in dem Kugellagerring 16 in entsprechenden, umfänglich in den aufeinander zu zeigenden Stirnflächen sowohl des ersten Kupplungsrings 15 als auch des zweiten Kupplungsrings 17 angeordneten Rampen 19 geführt, wie aus der Fig. 1 zu ersehen ist, so dass ein entsprechender drehmomentabhängiger Rollen-Rampen-Mechanismus ausgebildet wird.

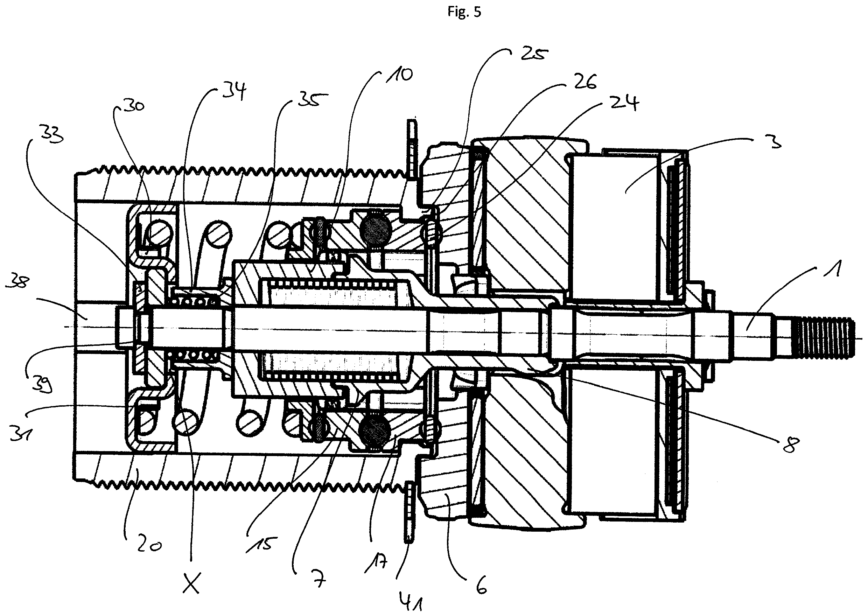

Der hintere Kupplungsring 17 überträgt eine auf diesen induzierte Drehbewegung dann mittels einer Feder-Nut-Verbindung auf eine hohle Nachstellspindel 20, zu deren Realisierung der hintere Kupplungsring 17 radial abragende, über den Umfang gleichmäßig verteilte Federn 21 aufweist, die in entsprechend komplementär ausgestalteten Nuten 22 an der radialen Innenseite der Nachstellspindel 20 eingreifen, wie exemplarisch in den Fig. 4b und 5 zu erkennen ist.

Die Nachstellspindel 20 steht über einen Gewindeeingriff mit einem Druckstück 23 des Druckelements C in Verbindung, das in dem Gehäuse des Bremssattels linear verschieblich, jedoch nicht drehbar geführt ist, so dass eine Drehbewegung zu Nachstellzwecken der Nachstellspindel 20 zu einem linearen Versatz des Druckstücks 23 führt. Wie zu erkennen ist, umschließt die Nachstellspindel 20 die weiteren Komponenten der Nachstelleinrichtung B vollständig. Das stempel- bzw. topfartig ausgebildete Druckstück 23 des Druckelements C wirkt an seiner Vorderseite mit einem (hier nicht dargestellten) Bremsbelaghalter zusammen, um die Zuspannkraft auf die Bremsscheibe zu übertragen.

Die Zuspannkraft wird in das Druckstück 23 eingeleitet, indem sich die Nachstellspindel 20 unmittelbar an dem Lagersitzkörper 6 des Hebels 2 abstützt. D.h. die durch die Schwenkbewegung des Hebels 2 in dem Lagersitzkörper 6 eingeleitete Zuspannkraft wird in die Nachstellspindel 20 und über den Gewindeeingriff auf das Druckstück 23 und von dort dann über den Bremsbelag bei Bremseingriff in die Bremsscheibe übertragen.

Des Weiteren stützt sich der hintere Kupplungsring 17 über ein friktionsarmes Axiallager 24 an dem Lagersitzkörper 6 ab. Der Lagersitzkörper 6 steht mit der Nachstellspindel 20 unmittelbar in kraftübertragenden Kontakt, wobei radial abschnittsweise umlaufende, axiale Vorsprünge 25 der Nachstellspindel 20 in eine entsprechend ausgestaltete Ringausnehmung 26 des Lagersitzkörpers 6 eingreifen. Hierdurch wird erreicht, dass der Hauptkraftfluss der Zuspannkraft von dem Lagersitzkörper 6 direkt in die Nachstellspindel 20 und über den Gewindeeingriff auf das Druckstück 23 erfolgt, während auf Grund des friktionsarmen Axiallagers 24 der hintere Kupplungsring 17 und damit die Nachstelleinrichtung B insgesamt weitestgehend von der Zuspannkraft in axialer Richtung entkoppelt bleibt.

An der dem Axiallager 24 gegenüberliegenden Seite ist der vordere Kupplungsring 15 über ein weiteres friktionsarmes Axiallager 27 an einem Lagerhaltering 28 drehbar geführt.

An dem Lagerhaltering 28 kommt eine Feder 29 der Rückstelleinrichtung D zur Anlage. Die als Schraubenfeder konzipierte Rückstellfeder 29 wiederum stützt sich unter Zwischenschaltung eines Gleitrings 30 an einer Widerlagerschale 31 ab, die an dem bremsscheibenzugewandten Ende des Stabs 1 befestigt ist. Die Rückstellfeder 29 ist so konzipiert, dass sie auf die zweite Momentkupplung eine definierte Vorspannung ausübt, die das begrenzende Übertragungsmoment zwischen den Kupplungsringen 15, 17 festlegt.

Die Widerlagerschale 31 wird hierbei von einem Widerlagerring 32 und einem Befestigungselement 33 auf dem Stab 1 in einer drehbaren Anordnung gehalten, wie nachfolgend noch erläutert wird.

Im Bereich des vorderen Endes des Stabs 1 ist eine Lagerhülse 34 vorgesehen, die sich an der bremsscheibenabgewandten Seite unmittelbar an der Stirnseite des Ausgangselements 10 abstützt.

Diese Lagerhülse 34 nimmt ein Federelement 35 auf, das sich wiederum an dem Widerlagerring 32 abstützt. Auf diese Art und Weise wird gemäß der Erfindung von dem Federelement 35 über das Ausgangselement 10 auf das Eingangselement 7 eine definierte Vorspannung ausgeübt.

An dem bremsscheibenzugewandten Ende weist die Lagerhülse 34 zu dem Widerlagerring 32 einen Abstand X auf, wobei das Federelement 35 eine Öffnung 36 in der Widerlagerschale 31 durchgreift.

Es wird deutlich, dass es hierdurch ermöglicht wird, dass sich das Eingangselement 7 und damit auch das Ausgangselement 10 mit der Lagerhülse 34 maximal um diesen Abstand X in Axialrichtung auf die Bremsscheibe zu bewegen können, wobei sich die Lagerhülse 34 dabei durch die Öffnung 36 in der Widerlagerschale 31 hindurch bewegt, bis diese an dem Widerlagerring 32 zur Anlage kommt.

Bei einer Schwenkbewegung des Hebels 2 bewegt sich die Ausnehmung 9 im Hebel 2 auf einer Kreisbahn nach vorne in Richtung zu der Bremsscheibe. Bis der obere Rand der Ausnehmung 9 mit dem Zapfen 8 in Kontakt kommt, wird zuerst ein Spiel A überbrückt, das dem verschleißunabhängigen Lüftspiel der Bremse entspricht, das nie nachgestellt wird, wie die Fig. 4a zeigt.

Danach nimmt die Ausnehmung 9 den Zapfen 8 auf der der Schwenkbewegung entsprechenden Kreisbahn mit und versetzt so das Eingangselement 7 auf dem Stab 1 in Drehung.

Gleichzeitig wird durch den sich aus der Kreisbahn ergebenden Vorschub infolge der Schwenkbewegung von der Ausnehmung 9 bzw. dem Hebel 2 eine Kraft auf den Zapfen 8 in Richtung auf die Bremsscheibe ausgeübt. Da das Eingangselement 7 und im Prinzip auch die gesamte Nachstelleinrichtung B auf dem Stab 1 axial verschieblich gelagert ist, vollführt das Eingangselement 7 zusammen mit der Nachstelleinrichtung B eine axiale Vorwärtsbewegung auf dem Stab 1, die entgegen der Vorspannung des Federelements 35 gerichtet ist.

Diese Vorwärtsbewegung kommt dann zu einem Ende, wenn nach Überbrückung des Abstands X die Lagerhülse 34 an dem Widerlagerring 32 zur Anlage kommt.

Auf Grund der Tatsache, dass sich der Zapfen 8 zusätzlich zu der Rotation zusammen mit der Ausnehmung 9 auch um eine maximal Länge X nach vorne bewegen kann, werden die in dem Kontaktpunkt zwischen der Ausnehmung 9 und dem Zapfen 8 wirkenden Kräfte in Axialrichtung reduziert und die Kontaktreibung dadurch minimiert, wodurch sich unter Verminderung des Verschleißes die Lebensdauer dieser Vorrichtung wesentlich erhöhen lässt.

Gemäß der Erfindung soll der Abstand X dabei so gewählt werden, dass die Verminderung der Kräfte in einem ausreichenden Maße erfolgen kann und gleichzeitig die Funktionssicherheit der Kraftübertragung zwischen dem Hebel 2 und dem Zapfen 8 für jeden Verschleißzustand zur Aktivierung der Nachstelleinrichtung B gewährleistet bleibt.

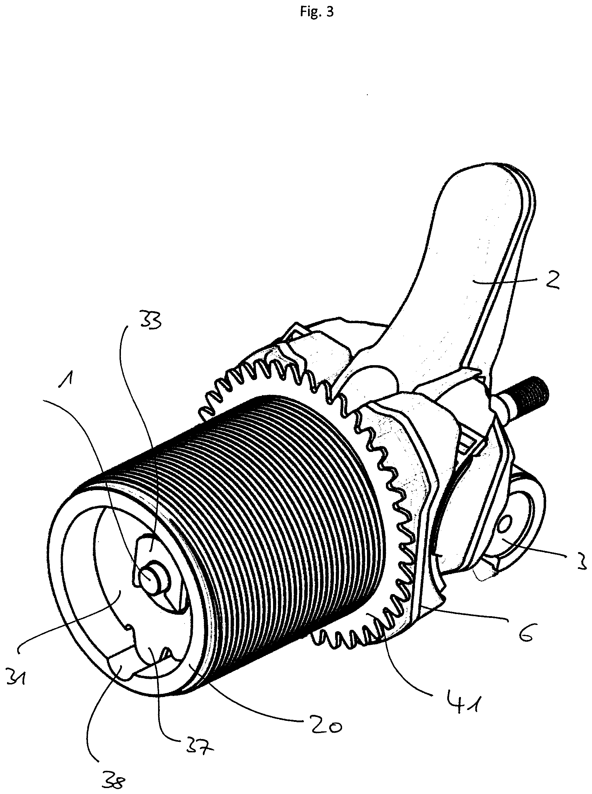

Die Widerlagerschale 31 ist mit der Nachstellspindel 20 drehmomentübertragend gekoppelt, indem ein Vorsprung 37 der Widerlagerschale 31 in einer axialen Längsnut 38 an der Innenfläche der Nachstellspindel 20 verschieblich geführt ist, wie aus der Fig. 3 zu ersehen ist.

Da sich die Widerlagerschale 31 mit der Nachstellspindel 20 dreht, ist das bremsscheibenzugewandte Ende der Rückstellfeder 29 über den in der Widerlagerschale 31 gelagerten Gleitring 30 entkoppelt.

Das Befestigungselement 33, das auf eine Ringnut 39 des Stabs 1 aufgesteckt wird, und der Widerlagerring 32 können sich daher gemeinsam mit der Widerlagerschale 31 drehen. Gemäß der Erfindung wird das Reibungsverhalten zwischen dem Befestigungselement 33 und dem Stab 1 in der Ringnut 39 bei einer derartigen Drehung über eine entsprechende Dimensionierung dieser Elemente und/oder Bestimmung der Oberflächenbeschaffenheit in den Kontaktflächen so festgelegt, dass als Reaktion ein definiertes Gegendrehmoment auf den gesamten Bremsbetätigungsmechanismus ausgeübt wird, das in der Lage ist, den Verschleiß zwischen relativ zueinander beweglich angeordneten Bauteilen vor allem der Nachstelleinrichtung B zu verringern.

Wie aus der Figur 1 zu ersehen ist, wird der gesamte Bremsbetätigungsmechanismus bremsscheibenseitig durch das auf dem Stab 1 drehbar gelagerte Befestigungselement 33 und bremsscheibenabgewandt durch einen Befestigungsring 40 auf dem Stab 1 gehalten, indem der Verstärkungsmechanismus A, die Nachstelleinrichtung B, das Druckelement C und die Rückstelleinrichtung D funktional zusammenwirkend angeordnet werden, wobei die hohle Nachstellspindel 20 die übrigen Komponenten der Nachstelleinrichtung B und die Rückstelleinrichtung D vollständig aufnimmt. Der Bremsbetätigungsmechanismus kann mittels des Stabs 1 als Einheit in einem Gehäuse des Bremssattels montiert und befestigt werden.

Zu Beginn einer Bremsbetätigung, wenn noch kein Kontakt mit dem Bremsbelag und der Bremsscheibe besteht und folglich keine Bremskraft übertragen wird, und wenn der Hebel 2 während einer Vorwärtsbewegung des Lagersitzkörpers 6 die Hohlwelle 7 über den Zapfen 8 in Drehung versetzt, sperrt die Freilauffeder 11 der ersten Momentenkupplung das Eingangselement 7 mit der Radiallagernabe 10, so dass sich beide gemeinsam drehen. Über das Radiallager 13,14 wird dann diese Drehung entsprechend auf den vorderen Kupplungsring 15 übertragen.

Die entsprechend dimensionierte Rückstellfeder 29, die auf den Rollen-Rampen-Mechanismus der zweiten Momentenkupplung einwirkt, begrenzt das Drehmoment gegenüber dem hinteren Kupplungsring 17, der mit der Nachstellspindel 20 drehfest gekoppelt ist. Bedingt durch die von der Schraubenfeder 29 ausgeübte Federkraft dreht der vordere Kupplungsring 15 auch den hinteren Kupplungsring 17 und damit die mit diesem über die Keil-Nut-Verbindung drehfest verbundene Nachstellspindel 20. Die Rollkörper 18 verbleiben hierbei ortsfest in den in dem vorderen Kupplungsring 15 ausgebildeten Rampenflächen 19 auf der einen Seite und in den in dem hinteren Kupplungsring 17 ausgebildeten Rampenflächen (nicht gezeigt). Die Rampenflächen 19 sind durchgängig kreisförmig als ineinander übergehende Rampen ausgebildet, so dass jeweils ein Rollkörper 18 bei Bedarf in die nächste Rampenfläche 19 überspringen kann.

Da das Druckstück 23 in dem Gehäuse des Bremssattels ausschließlich axial geführt ist und sich daher nicht drehen kann, bewirkt eine Drehung der Nachstellspindel 20 eine axiale Verschiebung des Druckstücks 23. Hierdurch wird das Lüftspiel überbrückt, das dem Spiel A in der Ausnehmung 9 in dem Hebel 2 entspricht.

Kommt nun während der Bremsbetätigung der Bremsbelag mit der Bremsscheibe in Kontakt, bildet sich ein geschlossener Kraftfluss mit einer entsprechenden Gegenkraft zu der eingeleiteten Kraft aus. Bei ansteigender Kraft in Axialrichtung gibt es einen Punkt, an welchem das durch die Reibung in dem Gewindeeingriff bedingte Drehmoment zwischen dem Druckstück 23 und der Nachstellspindel 20 größer sein wird, als das durch die Schraubenfeder 29 in die zweite Momentkupplung induzierte Drehmoment für die Drehmomentbegrenzung. Infolgedessen bleiben die Nachstellspindel 20 und damit der hintere Kupplungsring 17 stehen.

Zu diesem Moment drehen sich jedoch das Eingangselement 7, das Ausgangselement 10 und der vordere Kupplungsring 15 weiter, was bewirkt, dass die Rollkörper 18 nicht mehr stationär verharren, sondern sich in den Rampenflächen 19 weiterbewegen und gegen diese auflaufen.

Da der hintere Kupplungsring 17 gegenüber dem Lagersitzkörper 6 über ein friktionsarmes Axiallager 24 abgestützt ist, bewirkt das Auflaufen der Rollkörper 18, dass sich der vordere Kupplungsring 15 von dem hinteren Kupplungsring 17 in Richtung auf die Bremsscheibe zu wegbewegt und so die Schraubenfeder 29 komprimiert. Diese Kompression erfolgt während der gesamten Bremsbetätigungsbewegung und bildet quasi den elastischen Anteil für die anschließende Rückstellbewegung aus.

Leitet der Aktuator keine Kraft mehr in den Bremsbetätigungsmechanismus ein, beginnt die durch die Rückstelleinrichtung D unterstützte Rückstellbewegung.

Anfänglich besteht noch ein Kontakt zwischen dem Bremsbelag und der Bremsscheibe, bei dem noch erhebliche Kräfte wirken. Die einzelnen Komponenten, hinterer Kupplungsring 17 und vorderer Kupplungsring 15 mit den Rollkörpern 18 dazwischen und das Eingangselement 7 drehen sich dann in umgekehrter Drehrichtung, bis sie ihre ursprüngliche Winkelstellung zu Bremsbeginn wieder einnehmen. Diese Komponenten kehren ihre Bewegungen während des Bremshubs folglich entsprechend des vorhergehend erwähnten elastischen Anteils um.

Wenn während des erfolgten Bremshubs keine Abrasion am Bremsbelag aufgetreten ist und daher kein Verschleiß am Bremsbelag vorliegt, endet ein kraftleitender Kontakt zwischen den Bremsbelägen und der Bremsscheibe exakt zu dem Zeitpunkt, zu dem die Komponenten, hintere Kupplungsring 17, vordere Kupplungsring 15 und das Eingangselement 7 ihre Ausgangswinkellage wieder einnehmen. Diese Komponenten verharren dann so lange in ihrer Stellung, bis der Zapfen 8 bei der Schwenkbewegung des Hebels 2 in umgekehrter Schwenkrichtung an der gegenüberliegenden Anschlagsfläche der Ausnehmung 9 des Hebels 2 zum Anliegen kommt. Dann wird durch die rückwärtsgerichtete Schwenkbewegung des Hebels 2 die Eingangswelle 7, ggfs. unterstützt durch die Vorspannung des Federelements 35 aktiv in umgekehrter Drehrichtung weitergedreht, während bedingt durch die Freilauffeder 11 das Ausgangselement 10 und der vordere Kupplungsring 15 stehen bleiben. In dieser Phase rutscht die Freilauffeder 11 dann um einen solchen Winkel durch, der der Nachstellung des Lüftspiels während des Bremshubs entspricht.

Liegt dahingegen nach dem Bremshub ein Verschleiß am Bremsbelag vor, beispielsweise nach einer starken Notbremsung, hebt sich der kraftleitende Kontakt zwischen den Bremsbelägen und der Bremsscheibe auf, bevor die Komponenten, hinterer Kupplungsring 17 und vorderer Kupplungsring 15 mit den Rollkörpern 18 dazwischen ihre Ausgangswinkellage wieder einnehmen konnten.

Zu diesem Zeitpunkt bewirkt die durch die Schraubenfeder 29 in Axialrichtung auf die zweite Momentkupplung ausgeübte Kraft, dass sich die Nachstellspindel 20 in Drehung setzt, wodurch der Verschleiß ausgeglichen wird. Der weitere Bewegungsablauf der einzelnen Komponenten ist dann genauso, wie für den oben beschriebenen Fall ohne Verschleiß.

Auf der Nachstellspindel 20 ist ein Zahnrad 41 angeordnet, das mit einem gewissen axialen Abstand von dem Lagersitzkörper 6 positioniert ist, so dass unmittelbar keine Zuspannkraft in dieses Zahnrad eingeleitet wird. Das Zahnrad 41 dient dazu, die Nachstelleinrichtung B zurückzustellen, wenn die Bremsbeläge ausgetauscht werden müssen. Es wirkt hierfür mit einem separaten, von außerhalb des Bremssattels betätigbaren Mechanismus (nicht gezeigt) zusammen. In der gezeigten Ausführungsform ist das Zahnrad 41 auch von dem Abtriebselement der zweiten Momentenkupplung, dem hinteren Kupplungsring 17 entkoppelt. Es ist jedoch auch denkbar, dass dieser Kupplungsring 17 statt direkt die Nachstellspindel 20 das darauf befindliche Zahnrad 41 und damit indirekt die Nachstellspindel 20 antreibt, welches zu diesem Zweck radial nach innen gerichtete Vorsprünge aufweisen kann, die entsprechende Öffnungen in der Nachstellspindel 20 durchgreifen und mit dem Kupplungsring 17 eine entsprechende drehmomentübertragende Keil-Nut-Verbindung oder ähnliches eingehen, wobei sich jedoch das Zahnrad 41 immer noch außerhalb des Kraftflusses der Zuspannkraft befindet.

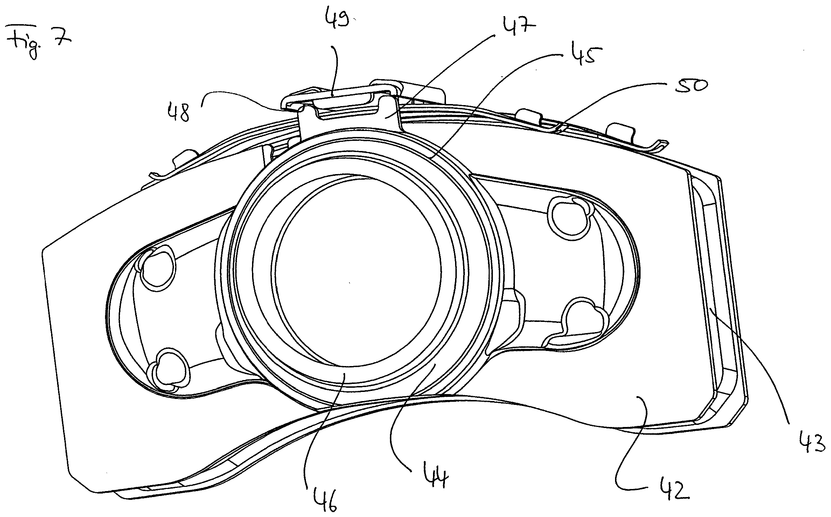

In der Fig. 7 ist exemplarisch ein Bremsbelaghalter 42 für einen Bremsbelag 43 gezeigt, der mit dem Druckstück des Druckelements C zusammenwirkt.

Wie erwähnt, muss das Druckstück nicht drehbar in dem Gehäuse des Bremssattels geführt werden, damit eine Drehung der Nachstellspindel 20 zu einer lineare Nachstellbewegung des Druckstücks führen kann.

Der Bremsbelaghalter 42 weist rückseitig eine Ringnut 44 auf, die durch eine radial außenliegende Ringwand 45 und einen radial innenliegenden Zylinderabschnitt 46 gebildet wird. Das bremsscheibenzugewandte Ende eines Druckstücks (nicht gezeigt) ist entsprechend formkomplementär ausgestaltet, so dass es mit der Ringnut 44 unter Berücksichtigung von entsprechenden Passungen eine kraftübertragende Verbindung in beiden Axialrichtungen eingehen kann.

Die Ringwand 45 weist nach oben gerichtet eine Kontur 47 auf, die in einer Gleitführung 48 linear geführt ist, wobei die Gleitführung 48 vorzugsweise an der Unterseite eines Niederhalters 49 für Belaghaltefedern 50 ausgebildet ist. Auf diese Weise kann das Druckstück und damit ggfs. der gesamte Bremsbetätigungsmechanismus über die Bremsbelaghalterplatte 42 in dem Gehäuse des Bremssattels linear geführt werden.

## Patentansprüche

1. Bremsbetätigungsmechanismus für eine Scheibenbremse mit
- einem Verstärkungsmechanismus (A) zur Einleitung einer Zuspannkraft für den Bremsvorgang,
- einem Druckelement (C) zur Übertragung der Zuspannkraft auf eine Bremsscheibe,
wobei der Verstärkungsmechanismus (A) und das Druckelement (C) so zusammenwirken, dass das Druckelement (C) durch eine Verlagerungsbewegung des Verstärkungsmechanismus (A) eine Bewegung in Richtung auf die Bremsscheibe ausführt,
- und einer Nachstelleinrichtung (B) zum Ausgleich eines Belagverschleißes, die mit dem Druckelement (C) zusammenwirkt, wobei der Verstärkungsmechanismus (A), das Druckelement (C) und die Nachstelleinrichtung (B) mittels eines in einem Gehäuse eines Bremssattels der Scheibenbremse in Axialrichtung unbeweglich und nicht drehbar gelagerten Stabs (1) funktional zusammenwirkend in dem Bremssattel montierbar sind,
wobei ein Eingangselement (7) der Nachstelleinrichtung (B) als eine Hohlwelle ausgebildet ist, die auf dem Stab (1) drehbar gelagert und durch eine Verlagerungsbewegung des Verstärkungsmechanismus (A) in Drehung versetzbar ist, **dadurch gekennzeichnet, dass**
die Hohlwelle (7) auf dem Stab (1) axial verschieblich bewegbar gelagert ist.

2. Bremsbetätigungsmechanismus nach Anspruch 1, bei dem die Hohlwelle (7) der Nachstelleinrichtung (B) unter einer Vorspannung steht.

3. Bremsbetätigungsmechanismus nach Anspruch 2, bei dem die Hohlwelle (7) ausgestaltet ist, um durch eine Verlagerungsbewegung des Verstärkungsmechanismus (A) in eine axiale Verschiebebewegung auf dem Stab (1) entgegen der Vorspannung versetzt zu werden.

4. Bremsbetätigungsmechanismus nach Anspruch 2 oder 3, bei dem die Vorspannung erzeugt wird, indem sich die Nachstelleinrichtung (B) mittelbar oder unmittelbar am bremsscheibenzugewandten Ende des Stabs (1) mit einem Federelement (35) an einem Widerlager (32) abstützt.

5. Bremsbetätigungsmechanismus nach Anspruch 4, bei dem das Federelement (35) in einer Lagerhülse (34) aufgenommen ist, deren bremsscheibenzugewandtes Ende zu dem Widerlager (32) einen Abstand (X) ausbildet, der den maximalen axialen Verschiebeweg der Hohlwelle (7) auf dem Stab (1) festlegt.

6. Bremsbetätigungsmechanismus nach Anspruch 5, bei dem die Hohlwelle (7) mit einem Ausgangselement (10) gekoppelt ist und sich die Lagerhülse (34) für das Federelement (35) an dem Ausgangselement (10) abstützt.

7. Bremsbetätigungsmechanismus nach Anspruch 6, bei dem das Ausgangselement (10) mit einer Momentkupplung zusammenwirkt, die mit einer Hohlspindel (20) des Druckelements (C) in einer drehmomentübertragenden Verbindung steht.

8. Bremsbetätigungsmechanismus nach Anspruch 7, bei dem der Verstärkungsmechanismus (A) einen Hebel (2) aufweist, der in einem Lagersitzkörper (6) schwenkbar gelagert ist, und die Hohlspindel (20) des Druckelements (C) unmittelbar mit dem Lagersitzkörper (5) in einer kraftübertragenden Verbindung steht.

9. Bremsbetätigungsmechanismus nach Anspruch 8, bei dem die Hohlwelle (7) einen Zapfen (8) aufweist, der radial absteht und in einer Ausnehmung (9) des Hebels (2) aufgenommen ist, wobei der Zapfen (8) und die Ausnehmung (9) so ausgestaltet und dimensioniert sind, dass der Zapfen (8) bei einer Schwenkbewegung des Hebels (2) teilweise eine Schraubendrehbewegung um den Stab (1) vollführen kann.

10. Bremsbetätigungsmechanismus nach einem der Ansprüche 4 bis 9, bei dem das Widerlager (32) auf dem Stab (1) drehbar gelagert ist.

11. Bremsbetätigungsmechanismus nach Anspruch 7, bei dem das Widerlager (32) mit einer Widerlagerschale (31) zusammenwirkt, an der sich eine Rückstelleinrichtung (D) abstützt, wobei die Widerlagerschale (31) mit der Hohlspindel (20) in einer drehmomentübertragenden und verschieblichen Verbindung steht.

12. Scheibenbremse aufweisend einen Bremsbetätigungsmechanismus nach zumindest einem der Ansprüche 1 bis 11.

13. Scheibenbremse nach Anspruch 12, bei der der Bremsbetätigungsmechanismus nach zumindest einem der Ansprüche 1 bis 11 durch einen Stab (1) in einem Gehäuse eines Bremssattels der Scheibenbremse als eine selbsttragende Einheit montierbar ist.

## Claims

1. Brake actuation mechanism for a disc brake having
- an amplification mechanism (A) for introducing a clamping force for the braking operation,
- a thrust element (C) for transmitting the clamping force to a brake disc,
wherein the amplification mechanism (A) and the thrust element (C) cooperate with each other so that the thrust element (C) performs a movement towards the brake disc by a displacement movement of the amplification mechanism (A),
- and an adjusting device (B) for compensating of lining wear, which cooperates with the thrust element (C),
wherein the amplification mechanism (A), the thrust element (C) and the adjusting device (B) can be mounted in the brake caliper in a functionally cooperating manner by means of a rod (1) mounted in a housing of a brake caliper of the disc brake so as to be immovable in the axial direction and non-rotatable,
wherein an input element (7) of the adjusting device (B) is made as a hollow spindle being rotatably mounted on the rod (1) and being set into rotation by a displacement movement of the amplification mechanism (A),
**characterized in that**
the hollow spindle (7) is mounted on the rod (1) in an axially displaceable manner.

2. Brake actuation mechanism according to claim 1, in which the hollow spindle (7) of the adjusting device (B) is under pretension.

3. Brake actuation mechanism according to claim 2, in which the hollow spindle (7) is adapted to be set into an axial displacement movement on the rod (1) against the pretension by a displacement movement of the amplification mechanism (A).

4. Brake actuation mechanism according to claim 2 or 3, in which the pretension is generated by the adjusting device (B) being supported indirectly or directly at the end of the rod (1) facing the brake disc with a spring element (35) against an abutment (32).

5. Brake actuation mechanism according to claim 4, in which the spring element (35) is received in a bearing sleeve (34) which end facing the brake disc forms a distance (X) from the abutment (32) which determines the maximum axial displacement path of the hollow spindle (7) on the rod (1).

6. Brake actuation mechanism according to claim 5, in which the hollow spindle (7) is coupled to an output element (10) and the bearing sleeve (34) for the spring element (35) is supported on the output element (10).

7. Brake actuation mechanism according to claim 6, in which the output element (10) cooperates with a torque clutch which is in torque-transmitting connection with a hollow spindle (20) of the thrust element (C).

8. Brake actuation mechanism according to claim 7, in which the amplification mechanism (A) comprises a lever (2) pivotally supported in a bearing seat body (6), and the hollow spindle (20) of the thrust element (C) is directly connected to the bearing seat body (5) in a force transmitting connection.

9. Brake actuating mechanism according to claim 8, in which the hollow spindle (7) has a pin (8) which projects radially and is received in a recess (9) of the lever (2), the pin (8) and the recess (9) being shaped and dimensioned in such a way that the pin (8) can partially execute a screw-turning movement about the rod (1) when the lever (2) pivots.

10. Brake actuating mechanism according to any one of claims 4 to 9, in which the abutment (32) is rotatably supported on the rod (1).

11. Brake actuating mechanism according to claim 7, in which the abutment (32) cooperates with an abutment shell (31) on which a return device (D) is supported, the abutment shell (31) being in a torque-transmitting and displaceable connection with the hollow spindle (20).

12. Disc brake comprising a brake actuation mechanism according to at least one of claims 1 to 11.

13. Disc brake according to claim 12, in which the brake actuation mechanism according to at least one of claims 1 to 11 is mountable by a rod (1) in a housing of a caliper of the disc brake as a self-supporting unit.

## Revendications

1. Mécanisme d'actionnement de frein pour un frein à disque, comprenant:
- un mécanisme d'amplification (A) pour introduire une force de serrage pour le processus de freinage,
- un élément de pression (C) pour transmettre la force de serrage sur un disque de frein,
dans lequel le mécanisme d'amplification (A) et l'élément de pression (C) coopèrent de telle sorte que l'élément de pression (C), par un mouvement de déplacement du mécanisme d'amplification (A), exécute un mouvement en direction du disque de frein, et
- un dispositif de rattrapage (B) qui coopère avec l'élément de pression (C) pour compenser une usure de garniture,
dans lequel le mécanisme d'amplification (A), l'élément de pression (C) et le dispositif de rattrapage (B) peuvent être montés à l'intérieur de l'étrier de frein de manière à coopérer de façon fonctionnelle par l'intermédiaire d'une barre (1) qui est logée de manière immobile dans la direction axiale et non rotative à l'intérieur d'un carter d'un étrier de frein du disque de frein, et
dans lequel un élément d'entrée (7) du dispositif de rattrapage (B) est réalisé sous la forme d'un arbre creux qui est logé de manière rotative sur la barre (1) et qui peut être amené en rotation par un mouvement de déplacement du mécanisme d'amplification (A),
**caractérisé en ce que** l'arbre creux (7) est logé sur la barre (1) de manière à pouvoir se déplacer de façon axialement coulissante.

2. Mécanisme d'actionnement de frein selon la revendication 1, dans lequel l'arbre creux (7) du dispositif de rattrapage (B) se trouve sous précontrainte.

3. Mécanisme d'actionnement de frein selon la revendication 2, dans lequel l'arbre creux (7) est configuré de manière à être amené dans un mouvement de coulissement axial sur la barre (1) à l'encontre de la précontrainte par l'entremise d'un mouvement de déplacement du mécanisme d'amplification (A).

4. Mécanisme d'actionnement de frein selon la revendication 2 ou 3, dans lequel la précontrainte est produite par le fait que le dispositif de rattrapage (B) s'appuie sur une butée (32) indirectement ou directement à l'extrémité tournée vers le disque de frein de la barre (1) à l'aide d'un élément ressort (35).

5. Mécanisme d'actionnement de frein selon la revendication 4, dans lequel l'élément ressort (35) est reçu à l'intérieur d'une douille de palier (34) dont l'extrémité tournée vers le disque de frein réalise par rapport à la butée (32) une distance (X) qui fixe le trajet de coulissement axial maximal de l'arbre creux (7) sur la barre (1).

6. Mécanisme d'actionnement de frein selon la revendication 5, dans lequel l'arbre creux (7) est accouplé à un élément de sortie (10) et la douille de palier (34) pour l'élément ressort (35) s'appuie sur l'élément de sortie (10).

7. Mécanisme d'actionnement de frein selon la revendication 6, dans lequel l'élément de sortie (10) coopère avec un embrayage à couple qui se trouve en liaison de transmission de couple avec une broche creuse (20) de l'élément de pression (C).

8. Mécanisme d'actionnement de frein selon la revendication 7, dans lequel le mécanisme d'amplification (A) comprend un levier (2) qui est logé de manière pivotante à l'intérieur d'un corps de siège de palier (6) et la broche creuse (20) de l'élément de pression (C) se trouve en liaison de transmission de force directement avec le corps de siège de palier (5).

9. Mécanisme d'actionnement de frein selon la revendication 8, dans lequel l'arbre creux (7) comprend un tourillon (8) qui fait saillie radialement et qui est reçu à l'intérieur d'un évidement (9) du levier (2), dans lequel le tourillon (8) et l'évidement (9) sont configurés et dimensionnés de telle sorte que le tourillon (8), lors d'un mouvement pivotant du levier (2), puisse exécuter en partie un mouvement rotatif hélicoïdal autour de la barre (1).

10. Mécanisme d'actionnement de frein selon l'une quelconque des revendications 4 à 9, dans lequel la butée (32) est logée de manière rotative sur la barre (1).

11. Mécanisme d'actionnement de frein selon la revendication 7, dans lequel la butée (32) coopère avec une coque de butée (31) sur laquelle un dispositif de rappel (D) s'appuie, dans lequel la coque de butée (31) se trouve en liaison de transmission de couple et coulissante avec la broche creuse (20) .

12. Frein à disque présentant un mécanisme d'actionnement de frein selon l'une quelconque des revendications 1 à 11.

13. Frein à disque selon la revendication 12, dans lequel le mécanisme d'actionnement de frein selon au moins l'une des revendications 1 à 11 peut être monté par l'intermédiaire d'une barre (1) à l'intérieur d'un carter d'un étrier de frein du frein à disque en tant qu'unité autoporteuse.
